# EUROPÄISCHE PATENTANMELDUNG

(11) **EP 4 440 239 A1**
(43) Veröffentlichungstag der Anmeldung: **02.10.2024**
(21) Anmeldenummer: 23164247.1
(22) Anmeldetag: 27.03.2023
(51) Int. Cl.: H04W 88/04, H04W 88/06, H04W 88/08, H04W 84/18, H04W 84/00, G06Q 50/28, G06Q 50/04, G06Q 50/00

(54) **VERFAHREN ZUM BETREIBEN EINES DRAHTLOSEN INDUSTRIELLEN EDGE-CLOUD-SYSTEMS MIT EINER ODER MEHREREN BASISFUNKSTATIONEN, SOWIE BASISFUNKSTATION UND ENDGERÄT**

(71) Anmelder: Siemens Aktiengesellschaft, 80333 München (DE)
(72) Erfinder: Sauer, Markus, 81739 München (DE); Zeiger, Florian, 85635 Höhenkirchen-Siegertsbrunn (DE)
(74) Vertreter: Siemens Patent Attorneys

(57) **Zusammenfassung**

Bei dem Verfahren zum Betreiben eines drahtlosen industriellen Edge-Cloud-Systems mit mindestens einer ersten Basisfunkstation wird eine Kommunikationsverbindung der Basisfunkstation oder einer der Basisfunkstationen zu einem Endgerät aufgebaut und das Endgerät als zusätzliche zweite Basisfunkstation herangezogen und eingerichtet.

Angegeben werden zudem eine Basisfunkstation und ein Endgerät.

## Beschreibung

Die Erfindung betrifft ein Verfahren zum Betreiben eines drahtlosen industriellen Edge-Cloud-Systems mit einer oder mehreren Basisfunkstationen. Die Erfindung betrifft zudem eine Basisfunkstation und ein Endgerät.

Drahtlose Kommunikationssysteme wie 5G- oder zukünftige 6G-Systeme wurden entwickelt, um Cloud-Technologien für eine bessere Skalierbarkeit zu nutzen. Dennoch haben solche Kommunikationssysteme eine definierte und eingeschränkte Abdeckung. Zahlreiche industrielle Anwendungen, insbesondere bei Großbaustellen, erfordern eine großflächige Abdeckung. Ein Anwendungsfall stellt etwa eine Autobahnbaustelle dar, bei welcher vorübergehend Funkeinheiten, etwa Antennen oder Funkgeräte oder Kommunikationsgeräte, installiert werden müssen. In der Regel ist eine kabelgebundene Verbindung zwischen solchen Funkeinheiten nicht möglich oder nicht erwünscht. Typischerweise werden daher oft proprietäre gerichtete drahtlose Verbindungen zur Überbrückung zwischen den Antennen installiert.

Es besteht also ein Bedarf, künftige Edge-Cloud-Systeme wie insbesondere 5G- und 6G-Systeme so zu modifizieren, dass eine bedarfsgerechte Erweiterung der Abdeckung mit ihren eigenen integralen Technologiebausteinen zu ermöglichen.

Es ist vor diesem Hintergrund des Standes der Technik die Aufgabe der Erfindung, ein verbessertes Verfahren zum Betreiben eines drahtlosen industriellen Edge-Cloud-Systems mit einem mehreren Basisfunkstationen anzugeben. Es ist zudem Aufgabe der Erfindung, eine verbesserte Basisfunkstation und ein verbessertes Endgerät anzugeben.

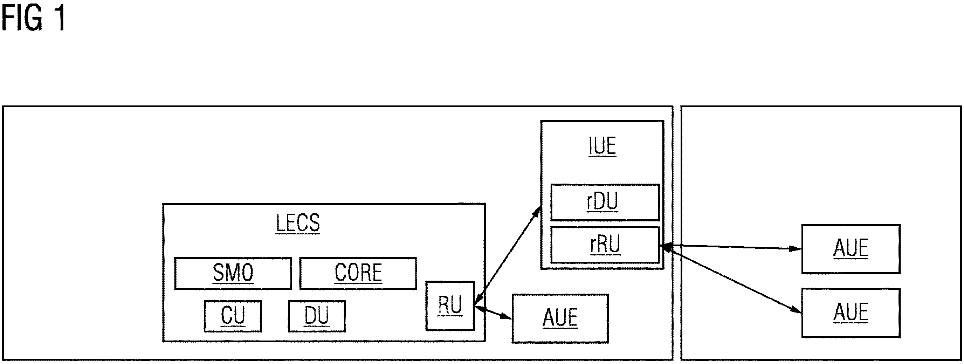

Diese Aufgabe der Erfindung wird mit einem Verfahren zum Betreiben eines drahtlosen industriellen Edge-Cloud-Systems mit einer oder mehreren Basisfunkstationen mit den in Anspruch 7 angegebenen Merkmalen sowie mit einer Basisfunkstation mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Betreiben eines drahtlosen industriellen Edge-Cloud-Systems mit mindestens einer ersten Basisfunkstation wird eine Kommunikationsverbindung der mindestens einen oder mindestens einer Basisfunkstation zu einem Endgerät aufgebaut und das Endgerät als zusätzliche zweite Basisfunkstation herangezogen und eingerichtet.

Kernidee der Erfindung ist es also, mittels der Einbindung eines Endgeräts als zusätzliche zweite Basisfunkstation eine doppelte Verwendung einer mobilen Kommunikationstechnologie wie insbesondere 5G oder 6G sowohl für die Realisierung der Backbone-Kommunikation des Endgeräts als auch für die Benutzer- und/oder Anwendungskommunikation weiterer Endgeräte auf der Grundlage bestehender Benutzerkommunikationskonzepte und -technologien des mobilen Kommunikationsstapels zu ermöglichen. Dazu wird das Endgerät erfindungsgemäß wie oben beschreiben herangezogen.

Mittels des erfindungsgemäßen Verfahrens kann vorteilhaft eine rekursive Erweiterung der Abdeckung eines drahtlosen Kommunikationssystems ermöglicht werden, indem entfernte Endgeräte Schritt für Schritt als jeweils zweite Basisfunkstationen durch "On-Board"-Funktechnologie verbunden werden. Erfindungsgemäß ist es nicht erforderlich, verschiedene Kommunikationstechnologien aufeinander abzustimmen, da die grundsätzliche Kommunikationstechnik, die zur Kommunikation zwischen Endgeräten mit dem Basissystem herangezogen wird, genutzt werden kann, um selbst eine zweite Basisfunkstation zu realisieren. Es sind also keine nahtlosen Überbrückungen zwischen verschiedenen Technologien erforderlich.

Erfindungsgemäß ist es vorteilhaft nicht erforderlich, mobile weitere Basisfunkstationen vorzusehen oder mittels unterschiedlicher Kommunikationstechnologien an die Backbone-Infrastruktur anzubinden. Das erfindungsgemäße Verfahren lässt sich zudem flexibel unter unterschiedlichen Umgebungsbedingungen einsetzen, etwa unabhängig vom Wetter, vom Zustand neu gebauter Komponenten und unabhängig von Lieferketten.

Erfindungsgemäß kann oder können die weiteren zweiten Basisfunkstationen autark mit deutlich reduziertem Ausfallrisiko, etwa durch eine Beschädigung von Kabeln, arbeiten. Darüber hinaus wird die Flexibilität deutlich erhöht und die Komplexität und die Kosten sind zugleich reduziert. Dies erweist insbesondere im Feldeinsatz wie insbesondere sich räumlich stets neu formierenden Baustellen als besonders vorteilhaft.

Mittels des erfindungsgemäßen Verfahrens resultiert eine reduzierte Systemkomplexität für ein industrielles Edge-Cloud-System, da die Anwendungskommunikation einerseits und die Infrastrukturkommunikation andererseits auf demselben Technologie-Stack basiert.

Grundsätzlich können in Weiterbildungen der Erfindung sämtliche Endgeräte, welche die zur Realisierung einer zweiten Basisfunkstation erforderlichen Hardwarefunktionen, wie insbesondere Rechenressourcen oder Funkkommunikationsmittel, aufweisen, als zusätzliche zweite Basisfunkstation eingerichtet werden. Auf diese Weise sind Edge-Cloud-Systeme vorteilhaft leicht skalierbar. Eine spezielle Hardware ist für die Realisierung weiterer Basisfunkstationen nicht erforderlich, sondern grundsätzlich können mit entsprechenden Hardwareressourcen ausgestattete Endgeräte mittels angepasster Konfiguration und angepasster Software als weitere Basisfunkstationen eingerichtet und herangezogen werden. In vorteilhaften und bevorzugten Weiterbildungen der Erfindung lassen sich die industriellen Edge-Cloud-Systeme auch autonom nutzen, etwa mittels solar- oder batteriebetriebener Endgeräte.

Entsprechend ist in einer bevorzugten Weiterbildung der Erfindung das Verfahren computerimplementiert, d. h. die Verfahrensschritte des Einrichtens des Endgeräts als zusätzliche zweite Basisfunkstation erfolgt mittels einer entsprechenden Installation und/oder Konfiguration und/oder eines Startens einer Software auf dem betreffenden Endgerät. Ferner wird das Heranziehen des Endgeräts als zusätzliche zweite Basisfunkstation bevorzugt mittels eines softwarebasierten Kommunikationsprotokolls realisiert.

Vorteilhaft lässt sich das erfindungsgemäße Verfahren mittels kaskadierter Anwendung skalieren, soweit die technische und physikalische Kommunikationsbandbreite ausreicht. Nachfolgend wird die Erfindung anhand eines in der Zeichnung dargestellten Ausführungsbeispiels näher erläutert.

Bevorzugt wird bei dem erfindungsgemäßen Verfahren das Endgerät als solche zweite Basisfunkstation herangezogen, welche zur Kommunikation mittels zwei oder mehr Kommunikationsprotokollen eingerichtet ist. In dieser Weiterbildung dient die zweite Basisfunkstation nicht allein zur Anwendung eines einzigen Kommunikationsprotokolls, sondern die zusätzliche zweite Basisfunkstation kann die Aufgaben herkömmlicher Basisfunkstationen vollumfänglich übernehmen.

Zweckmäßig ist bei dem Verfahren gemäß der Erfindung die erste und/oder zweite Basisfunkstation zur Kommunikation nach dem 3GPP-Standard ausgebildet.

Geeigneterweise ist in einer vorteilhaften Weiterbildung des erfindungsgemäßen Verfahrens die zweite Basisfunkstation zur Vermittlung von Kommunikationsverbindungen von zwei oder mehr Endgeräten miteinander ausgebildet. Auf diese Weise bildet die zweite Basisfunkstation nicht allein einen Uplink für weitere zusätzliche Endgeräte, sondern die zweite Basisfunkstation bildet einen vollumfänglichen Provider für sämtliche Kommunikationsverbindungen weiterer Endgeräte.

Bevorzugt ist bei dem erfindungsgemäßen Verfahren die zweite Basisfunkstation zur Vermittlung von Kommunikationsverbindungen mindestens eines mit der zweiten Basisfunkstation verbundenen Endgeräts mit einer Cloud des Edge-Cloud-Systems ausgebildet. In dieser Weiterbildung der Erfindung können sich die weiteren Endgeräte, die mit der zweiten Basisfunkstation verbunden werden, einfach mittels der zweiten Basisfunkstation mit der Cloud verbinden und somit ein Edge-Cloud-System ausbilden.

Vorzugsweise ist bei dem Verfahren gemäß der Erfindung das drahtlose industrielle Edge-Cloud-System ein Fertigungssystem und/oder ein Wartungssystem und/oder ein Logistiksystem. Insbesondere in den vorgenannten industriellen Anwendungsfällen ist die durch das erfindungsgemäße Verfahren bereitgestellte Flexibilität und unaufwändige Erweiterbarkeit besonders vorteilhaft.

Besonders bevorzugt wird bei dem erfindungsgemäßen Verfahren das Endgerät derart als zweite Basisfunkstation herangezogen, dass die zweite Basisfunkstation selbst eine eigene Funkzelle aufbaut.

Bevorzugt stellt in einer Weiterbildung des erfindungsgemäßen Verfahrens dabei die zweite Basisfunkstation mindestens eine eigene Frequenz zur Kommunikation mit weiteren Endgeräten zur Verfügung, die sich von der Frequenz oder den Frequenzen, mit welchen die zweite Basisfunkstation mit der ersten Basisfunkstation in Kommunikationsverbindung steht, unterscheidet.

Vorzugsweise wird bei dem Verfahren gemäß der Erfindung das Endgerät derart als zweite Basisfunkstation herangezogen, dass die zweite Basisfunkstation für die Kommunikation mit weiteren Endgeräten mindestens ein weiteres Kanalzugriffsverfahren nutzt, welches verschieden ist von den Kanalzugriffsverfahren, welche Kommunikationsverbindungen von erster Basisfunkstation und zweiter Basisfunkstation miteinander und Kommunikationsverbindungen von erster Basisfunkstation und weiteren Endgeräten miteinander nutzen.

Vorzugsweise wird bei dem erfindungsgemäßen Verfahren das Endgerät derart als zweite Basisfunkstation herangezogen, dass die zweite Basisfunkstation für die Kommunikation mit weiteren Endgeräten mindestens ein weiteres Authentifizierungsverfahren nutzt, welches verschieden ist von den Authentifizierungsverfahren, welche Kommunikationsverbindungen von erster Basisfunkstation und zweiter Basisfunkstation miteinander und Kommunikationsverbindungen von erster Basisfunkstation und weiteren Endgeräten miteinander nutzen.

Besonders zweckmäßig wird bei dem Verfahren gemäß der Erfindung das bei 5G und/oder 6G etablierte Slicing herangezogen, um Kommunikationsverbindungen zwischen erster Basisfunkstation und der zweiten Basisfunkstation einerseits und der zweiten Basisfunkstation und weiteren Endgeräten andererseits zu trennen.

Mittels der vorgenannten Weiterbildungen der Erfindung kann eine gegenseitige Beeinflussung der Kommunikation zwischen der ersten Basisfunkstation und der zweiten Basisfunkstation einerseits und der zweiten Basisfunkstation und weiteren Endgeräten andererseits minimiert werden.

Besonders zweckmäßig wird bei dem erfindungsgemäßen Verfahren das Endgerät, welches einerseits als zweite Basisfunkstation herangezogen wird, nach wie vor als Endgerät genutzt. In dieser Weiterbildung der Erfindung übernimmt das Endgerät also nicht allein die Funktion der zweiten Basisfunkstation, sondern fungiert nach wie vor als Endgerät mit von der Funktion der zweiten Basisfunkstation verschiedenen Funktionen.

Bevorzugt wird bei dem erfindungsgemäßen Verfahren das Endgerät derart als zweite Basisfunkstation herangezogen, dass die zweite Basisfunkstation Kernfunktionalitäten der ersten Basisfunkstation, insbesondere die SMO-Funktion/en und/oder die CORE-Funktion/en, nutzt.

Bevorzugt wird bei dem erfindungsgemäßen Verfahren die Konfiguration des Endgeräts mittels, insbesondere von, der ersten Basisfunkstation festgelegt, während dieses Endgerät als zweite Basisfunkstation herangezogen wird.

Bei dem erfindungsgemäßen Verfahren wird zweckmäßig die Kommunikationsverbindung von erster Basisfunkstation und zweiter Basisfunkstation für solche Endgeräte, welche sich mit der zweiten Basisfunkstation verbinden, transparent gehalten.

Die erfindungsgemäße Basisfunkstation ist ausgebildet zur Teilnahme als erste Basisfunkstation an einem erfindungsgemäßen Verfahren wie vorhergehend beschreiben. Die erfindungsgemäße erste Basisfunkstation ist ausgebildet, eine Kommunikationsverbindung zu einem Endgerät aufzubauen und das Endgerät als zusätzliche zweite Basisfunkstation heranzuziehen und einzurichten. Insbesondere ist die erste Basisfunkstation ausgebildet, eine Authentisierung und/oder Provisionierung und/oder Konfiguration des Endgeräts als zweite Basisfunkstation vorzunehmen.

Die Basisfunkstation ist als erste Basisfunkstation vorzugsweise ausgebildet, mittels der Kommunikationsverbindung Kommunikationsverbindungen der zweiten Basisfunkstation mit der Cloud zu vermitteln. Die erste Basisfunkstation stellt also die Funktionalitäten für das zweite Basisfunkstation fungierende Endgerät bereit.

Das erfindungsgemäße Endgerät ist zur Teilnahme an einem erfindungsgemäßen Verfahren wie vorhergehend beschrieben ausgebildet und eingerichtet. Das erfindungsgemäße Endgerät ist zur Kommunikationsverbindung mit einer ersten Basisfunkstation eines drahtlosen industriellen Edge-Cloud-Systems eingerichtet und ausgebildet, eine Funktion als weitere, zweite, Basisfunkstation zu übernehmen und weitere Kommunikationsverbindungen dieser Funktion über die Kommunikationsverbindung mit der ersten Basisfunkstation des drahtlosen industriellen Edge-Cloud-Systems zu vermitteln.

In einer bevorzugten Weiterbildung des erfindungsgemäßen Endgeräts umfasst die Kommunikationsverbindung der Funktion eine Kommunikationsverbindung in eine Cloud des drahtlosen industriellen Edge-Cloud-Systems.

Bevorzugt ist oder umfasst das erfindungsgemäße Endgerät ein Fertigungsgerät und/oder ein Wartungsgerät und/oder ein Logistikgerät.

Nachfolgend wird die Erfindung anhand eines in der Zeichnung dargestellten Ausführungsbeispiels näher erläutert.

Die Zeichnungsfigur 1 zeigt ein drahtloses industrielles Edge-Cloud-System mit einem Ausführungsbeispiel einer erfindungsgemäßen Basisfunkstation und einem Ausführungsbeispiel eines erfindungsgemäßen Endgeräts zur Ausführung eines Ausführungsbeispiels eines erfindungsgemäßen Verfahrens schematisch in einer Prinzipskizze.

Im gezeigten Ausführungsbeispiel wird ein drahtloses industrielles Edge-Cloud-System betrieben. Dieses industrielle Edge-Cloud-System ist im dargestellten Ausführungsbeispiel ein Fertigungssystem. In weiteren, nicht eigens dargestellten Ausführungsbeispielen kann das industrielle Edge-Cloud-System auch ein Wartungssystem oder ein Logistiksystem sein.

Bei dem dargestellten Edge-Cloud-System wird eine eingesetzte mobile Kommunikationstechnologie des Edge-Cloud-Systems, hier 5G, sowohl für die Realisierung der Backbone-Kommunikation als auch für die Benutzer-/Anwendungskommunikation auf der Grundlage bestehender Benutzerkommunikationskonzepte und - technologien mobiler Kommunikationssystem herangezogen. Grundsätzlich kann in weiteren nicht eigens dargestellten Ausführungsbeispielen die Kommunikationstechnologie auch eine 6G-Technologie oder eine sonstige mobile Kommunikationstechnologie sein.

Zur Durchführung des erfindungsgemäßen Verfahrens wird im dargestellten Ausführungsbeispiel eine neue Systemkomponente, vorliegend als Infrastruktur-Endgerät IUE bezeichnet, herangezogen.

Das dargestellte industrielle Edge-Cloud-System umfasst eine Standard-5G-Systeminfrastruktur LECS und genügt dem 3GPP-Standard. Die Standard-5G-Systeminfrastruktur LECS lässt sich auch als Basis-5G-System bezeichnen und unterstützt definierte Ressourcenzuordnungen inklusive Garantien für eine Quality-of-Service, etwa für Slices in 5G-Systemen, und ist für die Kommunikation mit Endgeräten AUE und nachfolgend erläuterten Infrastrukturendgeräten IUE konfiguriert.

Das industrielle Edge-Cloud-System ist so konfiguriert, dass Kommunikationsverbindungen zu Infrastrukturkomponenten der Standard-5G-Systeminfrastruktur LECS, beispielsweise mittels sogenannten "Slicings", mit einer Anzahl definierter Qualitätskriterien möglich sind. Solche Infrastrukturkomponenten umfassen in an sich bekannter Weise Service-Management-/Orchestration-Einrichtungen SMO, grundlegende Basiseinrichtungen CORE sowie zentralisierte Einheiten, sogenannte "centralized units", CU und verteilte Einheiten, sogenannte "decentralized units", DU. Diese Infrastrukturkomponenten können auch als Backbone-Komponenten bezeichnet werden. Die Infrastrukturkomponenten stellen die internen Funkzugangsnetzkomponenten der Standard-5G-Systeminfrastruktur LECS dar.

Ferner umfasst die Standard-5G-Systeminfrastruktur LECS Basisfunkstationen RU, die eine direkt mit der Standard-5G-Systeminfrastruktur LECS kommunikationsverbunden sind und welche einerseits den Infrastrukturkomponenten Kommunikationsverbindungen untereinander sowie zu nicht zur Standard-5G-Systeminfrastruktur LECS gehörenden Endgeräten AEU und in die Cloud ermöglichen. Andererseits ermöglichen diese Basisfunkstationen RU auch Endgeräten AUE, welche nicht zu den Infrastrukturkomponenten der Standard-5G-Systeminfrastruktur LECS zählen, Kommunikationsverbindungen untereinander und mittels der Standard-5G-Systeminfrastruktur LECS in die Cloud. Diese Basisfunkstationen RU können unterschiedliche Frequenzen für die Kommunikation mit Endgeräten AUE und nachfolgend beschriebenen Infrastrukturendgeräten IUE verwenden.

Teil des dargestellten industriellen Edge-Cloud-Systems sind allerdings nicht allein die Endgeräte AUE und die Standard-5G-Systeminfrastruktur LECS. Es tritt eine spezielle Gruppe von Endgeräten hinzu, welche als Infrastruktur-Endgeräte IUE bezeichnet werden.

Diese Infrastrukturendgeräte IUE sind dazu ausgebildet und eingerichtet, Kommunikationsverbindungen zur Standard-5G-Systeminfrastruktur LECS derart einzurichten, dass die Infrastrukturendgeräte IUE Backbone-Kommunikationsverbindungen zu weiteren Endgeräten AUE zur Verfügung stellen.

Die Infrastrukturendgeräte IUE kommunizieren mit der Standard-5G-Systeminfrastruktur LECS, also dem lokalen 5G-Kommunikationssystem, über eine definierte Ressourcenzuweisung, beispielsweise mittels 5G-Slices, um die Infrastrukturendgeräte IUE mit der lokalen Standard-5G-Systeminfrastruktur LECS zu verbinden.

Die Infrastrukturendgeräte IUE selbst verfügen ebenfalls über Infrastrukturkomponenten wie verteilte Einheiten rDU des Infrastrukturgeräts IUE. Zudem umfassen die Infrastrukturendgeräte IUE zusätzlich jeweils mindestens ein eigenes Remote-Funkmodul rRU. Die verteilten Einheiten rDU der Infrastrukturendgeräte IUE verwalten und betreiben die Remote-Funkmodule rRU der Infrastrukturendgeräte IUE.

Die Infrastrukturendgeräte IUE verbinden sich selbst mittels ihrer eigenen Remote-Funkmodule rRU mit den Kernkomponenten der Standard-5G-Systeminfrastruktur LECS und richten hiermit Backbone-Kommunikationsverbindungen für Benutzerverkehr, Signalisierung und Verwaltung für weitere Endgeräte AUE ein.

Basierend auf dieser Backbone-Kommunikation zur Standard-5G-Systeminfrastruktur LECS bieten die Infrastrukturendgeräte IUE mittels ihrer eigenen Remote-Funkmodule rRU zusätzlich Kommunikationsverbindungen zu weiteren Endgeräten AUE an, die normalerweise nicht im Abdeckungsbereich der mit der Standard-SG-Systeminfrastruktur LECS verbundenen Basisfunkstationen RU liegen.

Die weiteren Endgeräte AUE stellen herkömmliche "normale" Endgeräte dar, beispielsweise ein industrielles Handgerät oder einen industriellen 5G-Router. Es wird für die Kommunikation zwischen Benutzeranwendungsendpunkten auf anderen UEs oder in einem Back-End-System verwendet.

Die Remote-Funkmodule rRU der Infrastrukturendgeräte IUE bieten Funkzugriff auf weitere Endgeräte AUE ohne versehentliche Störung ihrer eigenen Kommunikationsverbindung zur Standard-5G-Systeminfrastruktur LECS.

Somit ist eine Reichweitenerweiterung der lokalen Kommunikation durch effiziente Wiederverwendung der vorhandenen (gleichen) Kommunikationstechnologie möglich - ohne die Notwendigkeit einer nahtlosen Integration verschiedener Technologien.

## Patentansprüche

1. Verfahren zum Betreiben eines drahtlosen industriellen Edge-Cloud-Systems mit mindestens einer ersten Basisfunkstation (RU), bei welchem eine Kommunikationsverbindung der Basisfunkstation (RU) oder einer der Basisfunkstationen (RU) zu einem Endgerät (IUE) aufgebaut wird und das Endgerät (IUE) als zusätzliche zweite Basisfunkstation (rRU) herangezogen und eingerichtet wird.

2. Verfahren nach dem vorhergehenden Anspruch, bei welchem das Endgerät (IUE) als solche zusätzliche zweite Basisfunkstation (rRU) herangezogen wird, welche zur Kommunikation mittels zwei oder mehr Kommunikationsprotokollen eingerichtet ist.

3. Verfahren nach einem der vorhergehenden Ansprüche, bei welchem die mindestens eine erste Basisfunkstation (RU) zur Kommunikation nach dem 3GPP-Standard ausgebildet ist.

4. Verfahren nach einem der vorhergehenden Ansprüche, bei welchem die zusätzliche zweite Basisfunkstation (rRU) zur Vermittlung von Kommunikationsverbindungen von zwei oder mehr Endgeräten (AUE) miteinander ausgebildet ist.

5. Verfahren nach einem der vorhergehenden Ansprüche, bei welchem die zusätzliche zweite Basisfunkstation (rRU) zur Vermittlung von Kommunikationsverbindungen mindestens eines Endgeräts (AUE) mit einer Cloud des Edge-Cloud-Systems ausgebildet ist.

6. Verfahren nach einem der vorhergehenden Ansprüche, bei welchem das drahtlose industrielle Edge-Cloud-System ein Fertigungssystem und/oder ein Wartungssystem und/oder ein Logistiksystem ist.

7. Basisfunkstation, ausgebildet zur Teilnahme als erste Basisstation (RU) an einem Verfahren nach einem der vorhergehenden Ansprüche, welche ausgebildet ist, eine Kommunikationsverbindung zu einem Endgerät (IUE) aufzubauen und das Endgerät (IUE) als zusätzliche zweite Basisfunkstation (rRU) heranzuziehen und einzurichten.

8. Basisfunkstation nach dem vorhergehenden Anspruch, welches ausgebildet ist, mittels der Kommunikationsverbindung Kommunikationsverbindungen der zweiten Basisfunkstation (rRU) mit der Cloud zu vermitteln.

9. Endgerät, ausgebildet zur Teilnahme an einem Verfahren nach einem der vorhergehenden Ansprüche, welches zur Kommunikationsverbindung mit einer ersten Basisstation (RU) eines drahtlosen industriellen Edge-Cloud-Systems eingerichtet ist und welches ausgebildet ist, eine Funktion als zusätzliche zweite Basisfunkstation (rRU) zu übernehmen und weitere Kommunikationsverbindungen dieser Funktion über die Kommunikationsverbindung mit der ersten Basisstation (RU) des drahtlosen industriellen Edge-Cloud-Systems zu vermitteln.

10. Endgerät nach dem vorhergehenden Anspruch, bei welchem die Kommunikationsverbindung der Funktion eine Kommunikationsverbindung in eine Cloud des drahtlosen industriellen Edge-Cloud-Systems umfasst.

11. Endgerät nach einem der vorhergehenden Ansprüche, welches ein Fertigungsgerät und/oder ein Wartungsgerät und/oder ein Logistikgerät ist oder umfasst.
